# EUROPEAN PATENT SPECIFICATION

(11) **EP 2 191 321 B1**
(45) Date of publication and mention of the grant of the patent: **19.12.2012**
(21) Application number: 07822047.2
(22) Date of filing: 30.10.2007
(51) Int. Cl.: G02B 26/10, C04B 41/85, C04B 41/89

(54) **METHOD OF MANUFACTURING AND PROCESSING SILICON CARBIDE SCANNING AND OPTICAL MIRRORS**
VERFAHREN ZUR HERSTELLUNG UND VERARBEITUNG VON SILIZIUMCARBIDABTAST- UND OPTISCHEN SPIEGELN
PROCÉDÉ DE FABRICATION ET DE TRAITEMENT DE MIROIRS DE BALAYAGE ET OPTIQUES EN CARBURE DE SILICIUM

(30) Priority: 20.08.2007 WO PCT/EP2007/058615
(43) Date of publication of application: 02.06.2010
(73) Proprietor: MERSEN Deutschland Holding GmbH & Co. KG, 60437 Frankfurt (DE)
(72) Inventor: HASTINGS, Stephen, 81375 München (DE)
(74) Representative: Rupprecht, Kay
(86) International application number: PCT/EP2007/061693
(87) International publication number: WO 2009/024193

(56) References cited:
- NOVI A ET AL: "Silicon carbide for mirrors by plasma enhanced chemical vapour deposition at low temperature" EUR SPACE AGENCY SPEC PUBL ESA SP; EUROPEAN SPACE AGENCY, (SPECIAL PUBLICATION) ESA SP; PROCEEDINGS OF THE 5TH INTERNATIONAL CONFERENCE ON SPACE OPTICS (ICSO 2004) JUNE 2004, no. 554, 30 March 2004 (2004-03-30), pages 687-690, XP002474906
- SWEENEY MICHAEL N: "Advanced manufacturing technologies for light-weight, post polished, snap-together reflective optical system designs" PROC SPIE INT SOC OPT ENG; PROCEEDINGS OF SPIE - THE INTERNATIONAL SOCIETY FOR OPTICAL ENGINEERING 2002, vol. 4771, 2002, pages 144-154, XP002474908
- HEANEY JAMES B ET AL: "Protected silver coatings for low-scatter SiC and SiC/Si mirror surfaces" PROC SPIE INT SOC OPT ENG; PROCEEDINGS OF SPIE - THE INTERNATIONAL SOCIETY FOR OPTICAL ENGINEERING 2003, vol. 5179, 2003, pages 234-245, XP002474907
- RICH LISA ET AL: "Polishing process for concave lightweight silicon-coated silicon carbide optics" PROC SPIE INT SOC OPT ENG; PROCEEDINGS OF SPIE - THE INTERNATIONAL SOCIETY FOR OPTICAL ENGINEERING 1995 SOCIETY OF PHOTO-OPTICAL INSTRUMENTATION ENGINEERS, BELLINGHAM, WA, USA, vol. 2543, 1995, pages 236-247, XP002474909

## Description

### Field of the Invention

This invention relates to a method of manufacturing and processing of Silicon Carbide scanning or optical mirrors. In addition, the invention relates to the method to achieve low cost production and high quality surface finishes on Silicon Carbide scanning or optical mirrors using available isostatic pressing, sintering and polishing techniques by depositing or bonding an alternative material on said Silicon Carbide scanning or optical mirrors, eg. Silicon, and subsequently using said available polishing techniques to polish said alternative material instead of directly polishing the Silicon Carbide material.

### Background of the Invention

Traditional Silicon Carbide scanning or optical mirror manufacturing is limited by several factors:
Firstly, and because Silicon Carbide is a material with an extremely high mechanical hardness it is significantly expensive and time consuming to manufacture as scanning or optical mirrors when the Silicon Carbide powder is pre-pressed or pre-isostatically pressed and then engineered or Computer Numerical Control engineered and then treated or sintered.
Secondly, and because Silicon Carbide is a material with an extremely high mechanical hardness it is significantly expensive and difficult to polish to industrially required flatness with good cost-efficiencies.
Thirdly, because said Silicon Carbide has such said extremely high mechanical hardness, when manufactured for use as for example plano scanning or optical mirrors the surface that will eventually become the reflective surface is required to be produced as flat as possible in preparation for lapping and/or polishing using grinding technology and commonly diamond wheel grinding.
Fourth, because said grinding and commonly diamond wheel grinding can achieve planarity of said example piano Silicon Carbide scanning or optical mirrors depending upon the positional accuracy of said grinding technology said planarity achieved is cost-relative to the said positional accuracy of said grinding technology.
Fifth, because said Silicon Carbide has such said extremely high mechanical hardness the polishing of said example Silicon Carbide scanning or optical mirrors may involve up to four separate lapping and/or polishing stages with greater polishing material/s wear and consumption and greater lapping and/or polishing times.
Sixth, because said Silicon Carbide has a particular surface structure, after lapping and/or polishing said surface structure will only have a surface quality of at best a Ra of 3 micrometers.
Seventh, because said surface quality of said Silicon Carbide after lapping and/or polishing will have a surface quality of at best a Ra of 3 micrometers spatial effects may limit the reflective performance of said example plano Silicon Carbide scanning or optical mirrors in applied use after final optical coating.

Eighth, because said surface quality of said Silicon Carbide after lapping and/or polishing is not generally known and quantified by the optical coating industries it is probable that testing, trials and authentication may be required to authenticate optical coatings direct onto Silicon Carbide and may also require modifications to the chemical mixture of said optical coatings.

"A Novi et al., Proceedings of the 5th International Conference on Space Optics, 687 (2004)" discloses coating of a cold pressed and sintered silicon carbide mirror substrate with silicon carbide layer by chemical vapour deposition followed by polishing. The mirror is finally coated with any standard reflective thin film.

"M.N. Sweeney, Proceedings of SPIE Vol. 4771, 144 (2002)" discloses as alternative material to the silicon material (Sic) layer disclosed in D1 a layer of copper or aluminium. D2 is silent about the deposition process of the layer.

### Summary of the Invention

The invention is defined in independent claim 1. Preferred embodiments are presented in the dependent claims.

A method is provided for the manufacturing and processing of finished Silicon Carbide scanning or optical mirrors whereby said Silicon Carbide scanning or optical mirrors are produced by pressing or stamping or isostatically pressing Silicon Carbide powder using an engineered stamp or tool and then sintered and where high quality surface finishes on said Silicon Carbide scanning or optical mirrors are achieved using available polishing techniques by pre-depositing or bonding an alternative material on said Silicon Carbide scanning or optical mirrors, eg. Silicon, and subsequently using said available polishing techniques to polish said alternative material instead of directly polishing the Silicon Carbide material.

In this method the scanning or optical mirror is designed and from the design parameters a stamp or tool is then manufactured that will form the Silicon Carbide scanning or optical mirrors by pressing or stamping or isostatically pressing Silicon Carbide powder using said stamp or tool and then sintered.

The surface that will become the reflective surface of said scanning or optical mirror may then be ground using grinding technology and commonly diamond wheel grinding or lapped or polished using commonly available lapping or polishing technology before being coated by a thermal spray process, e.g. high velocity Oxygen fuel thermal spray process (HVOF) or Cold Gas Spray deposition technology, to deposit a layer of material bonded to said surface of said Silicon Carbide that will become said reflective surface and once coated or bonded with said layer of material deposited to or bonded to said surface of said Silicon Carbide that will become said reflective surface said layer of material is then lapped and/or polished to the required flatness using available lapping and/or polishing techniques so that once polished to said required flatness said Silicon Carbide scanning or optical mirror now coated or bonded with a layer of material on the said surface that will become said reflective surface is ready for optical coating using coating technologies and materials to coat said surface that will become said reflective surface with suitable high reflective optical coatings specific to the wavelength or wavelengths that the finished Silicon Carbide scanning or optical mirror will be used to reflect in final application/s.

Advantageously, Silicon Carbide is significantly cheaper and faster to manufacture as scanning or optical mirrors when the Silicon Carbide powder is pressed or stamped or isostatically pressed using an engineered stamp or tool and then sintered than when the Silicon Carbide powder is pre-pressed or pre-isostatically pressed and then engineered for example by Computer Numerical Control engineering and then treated or sintered.

Advantageously, because said layer of material bonded to said surface of said Silicon Carbide that will become said reflective surface is significantly easier to lap and/or polish than the raw Silicon Carbide material of said surface without any additional layer material said lapping and/or polishing is faster and cheaper.

Advantageously, because said layer of material deposited on or bonded to said surface of said Silicon Carbide that will become said reflective surface is of a significantly finer structure than the raw Silicon Carbide material of said surface without any additional layer of deposited or bonded material said layer of material will give a finer surface roughness and/or surface quality after lapping and/or polishing and significantly decrease reflective spatial effects in application when coated with suitable high reflective optical coatings specific to the wavelength or wavelengths that the finished Silicon Carbide scanning or optical mirror will be used to reflect in final application/s.

Advantageously, because said layer of material bonded to said surface of said Silicon Carbide that will become said reflective surface is of a known and quantified material to the optical coating industries where the raw Silicon Carbide material of said surface without any additional layer of material is generally not said layer of material and in this embodiment Silicon known and quantified to the optical coating industries has known and quantified bonding to suitable high reflective optical coatings specific to the wavelength or wavelengths that the finished Silicon Carbide scanning or optical mirrors will be used to reflect in final application/s.

### Brief Description of the Drawings

Figure 1 is a diagram of a production flowchart depicting an ideal process flow to produce finished Silicon Carbide scanning or optical mirrors.
Figure 2 is a simple side elevation diagram depicting a typical Silicon Carbide scanning mirror.
Figure 3 is a simple side elevation diagram depicting deposition onto a typical Silicon Carbide scanning mirror.
Figure 4 is a simple side elevation diagram depicting a deposited alternative material layer on a typical Silicon Carbide scanning mirror.
Figure 5 is a simple side elevation diagram depicting optical coating onto a deposited alternative material layer on a typical Silicon Carbide scanning mirror.

### Detailed Description of the Invention

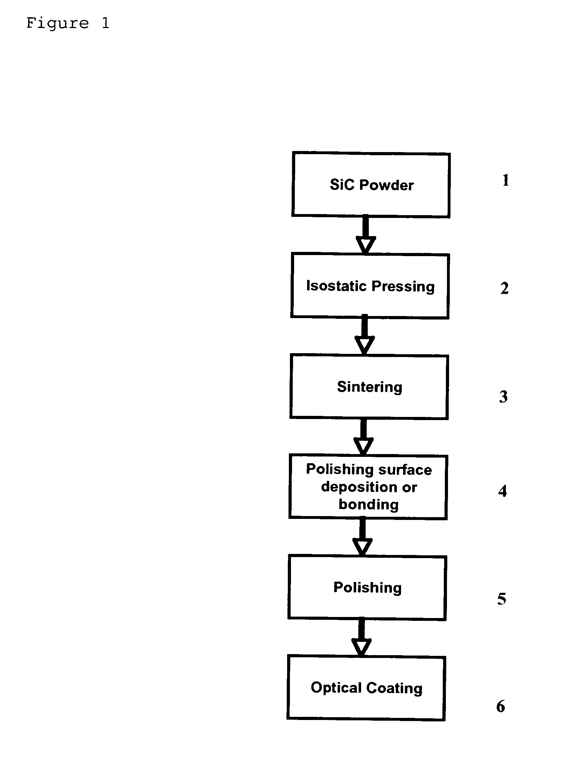

As depicted in the production process flowchart in Figure 1, Silicon Carbide powder (1) is pressed or stamped or isostatically pressed (2) using an engineered stamp or tool to form the shape and structure of a scanning or optical mirror which is then sintered (3) to provide a Silicon Carbide scanning or optical mirror with a surface that is the face surface of said scanning or optical mirror that may be then ground using grinding technology and commonly diamond wheel grinding or lapped or polished (not shown) using commonly available lapping and/or polishing technology.

The Silicon Carbide scanning or optical mirror now with a surface that is the face surface of said scanning or optical mirror ground using grinding technology and commonly diamond wheel grinding or lapped or polished using commonly available lapping and/or polishing technology enters a deposition or bonding process (4) and in this embodiment high velocity Oxygen fuel thermal spray process or HVOF or Cold Gas Spray or wafer bonding to deposit or bond a suitably thick layer of alternative material onto said face surface of said scanning or optical mirror.

The Silicon Carbide scanning or optical mirror now with a surface that is the face surface of said scanning or optical mirror deposited or bonded with a suitably thick layer of material and in this embodiment Silicon onto said face surface of said scanning or optical mirror enters the polishing process stage (5) where by lapping and/or polishing of said suitably thick layer of material deposited on or bonded to said face surface of said scanning or optical mirror the required surface quality and/or roughness and/or flatness is achieved.

The Silicon Carbide scanning or optical mirror now with a surface that is the face surface of said scanning or optical mirror deposited or bonded with a suitably thick layer of material onto said face surface of said scanning or optical mirror and further polished where by lapping and/or polishing of said suitably thick layer of material deposited on or bonded to said face surface of said scanning or optical mirror so that said required surface quality and/or roughness and/or flatness is achieved by lapping and/or polishing said deposited or bonded material then enters the optical coating process stage (6) where coating technologies and materials are used to coat said polished surface that post optical coating will become the reflective surface with suitable high reflective optical coatings specific to the wavelength or wavelengths that the finished Silicon Carbide scanning or optical mirror will be used to reflect in final application/s.

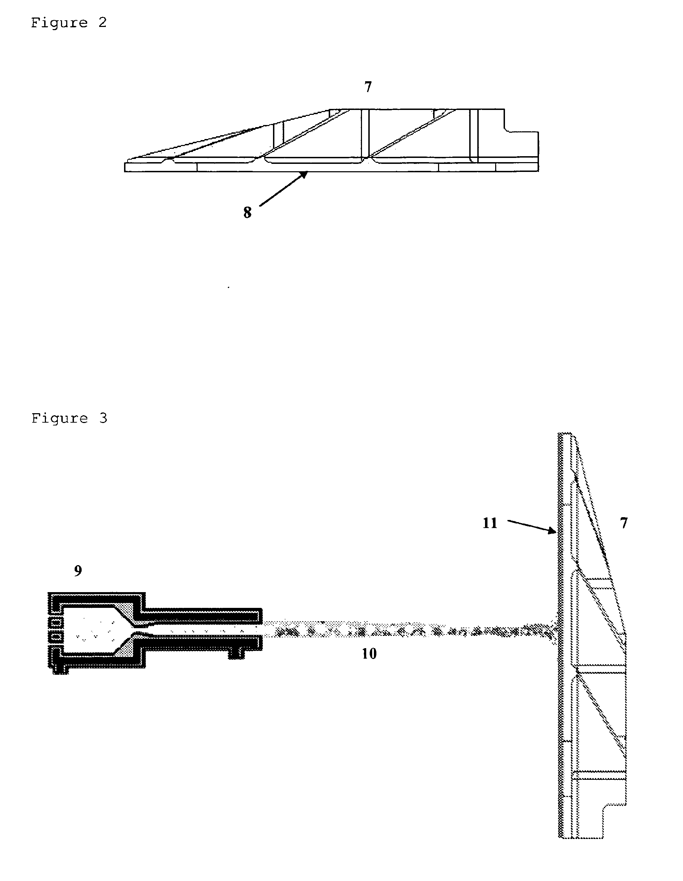

As depicted in Figure 2, in this embodiment a Silicon Carbide scanning mirror (7) is manufactured with a surface (8) that is the face surface of said scanning mirror.

As depicted in Figure 3, in this embodiment a Silicon Carbide scanning mirror (7) with a surface that is said face surface is deposited with a suitably thick layer of alternative material (11) onto said face surface of said scanning mirror (7) using deposition process equipment (9) and in this embodiment high velocity Oxygen fuel thermal spray process or HVOF or Cold Gas Spray to target deposition material (10) onto said surface of said Silicon Carbide scanning mirror (7).

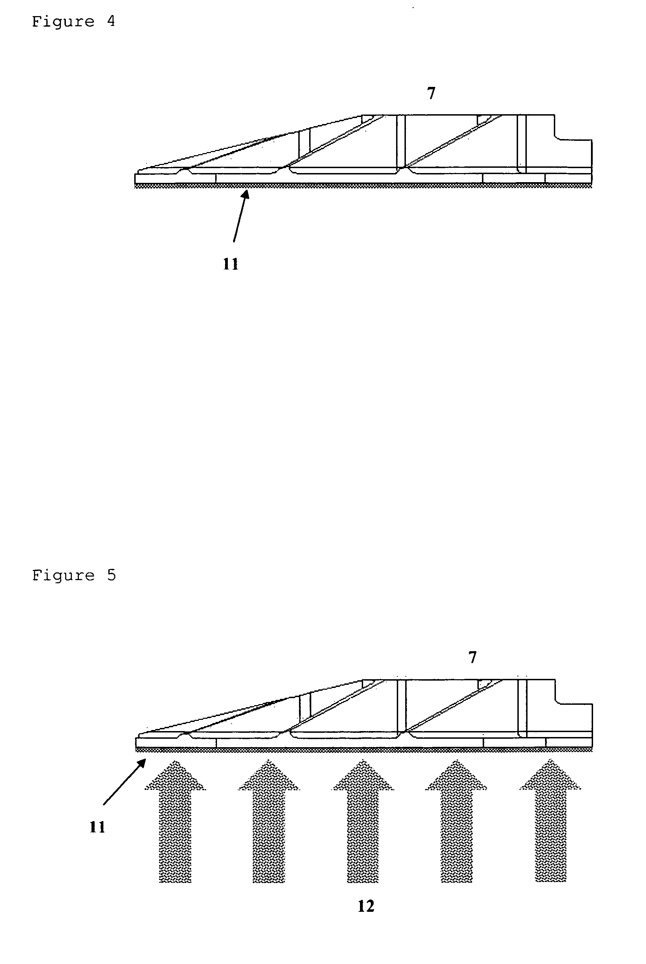

As depicted in Figure 4, in this embodiment a Silicon Carbide scanning mirror (7) with a surface that is said face surface has now deposited onto said surface a suitably thick layer of alternative material (11) onto said surface of said scanning mirror (7) ready for polishing using lapping and/or polishing techniques.

As depicted in Figure 5, in this embodiment a Silicon Carbide scanning mirror (7) with a surface that is said face surface with deposited or bonded onto said surface a suitably thick layer of material (11) and said face surface of said scanning mirror (7) has been polished using lapping and/or polishing techniques to produce said surface (11) to an acceptable quality, roughness and/or flatness said surface with said lapped and/or polished suitably thick layer of material (11) is then optically coated with suitable high reflective optical coatings (12) specific to the wavelength or wavelengths that the finished Silicon Carbide scanning mirror will be used to reflect in final application/s.

## Claims

1. A method of Silicon Carbide scanning or optical mirror production whereby Silicon Carbide powder is pressed or stamped or isostatically pressed using an engineered stamp or tool to form the shape and structure of a scanning or optical mirror which is then sintered to provide a surface that will become the face surface of said scanning or optical mirror that is then coated or bonded with a suitably thick layer of an alternative material deposited by a thermal spray process onto said face surface of said scanning or optical mirror that is then lapped and/or polished to achieve the desired surface quality and/or roughness and/or flatness and then optical coated using coating technologies and materials to coat said face surface that will then become the reflective surface with suitable high reflective optical coatings specific to the wavelength or wavelengths that the finished Silicon Carbide scanning or optical mirrors will be used to reflect in final application/s.

2. The method as claimed in Claim 1, wherein the suitably thick layer of material deposited or bonded onto the Silicon Carbide scanning or optical mirror is Silicon or Silicon Dioxide.

3. The method as claimed in Claim 1, wherein the suitably thick layer of material deposited or bonded onto the Silicon Carbide scanning or optical mirror is Copper.

4. The method as claimed in Claim 1, wherein the suitably thick layer of material deposited or bonded onto the Silicon Carbide scanning or optical mirror is Aluminium.

5. The method as claimed in Claims 1-4, wherein the suitably thick layer of material deposited onto the Silicon Carbide scanning or optical mirror is achieved using a high velocity Oxygen fuel thermal spraying process.

6. The method as claimed in claims 1-4, wherein the suitably thick layer of material deposited onto the Silicon Carbide scanning or optical mirror is achieved using a Cold Gas Spray thermal spray process.

7. The method as claimed in claims 1-4, wherein the suitably thick layer of material deposited onto the Silicon Carbide scanning mirror is achieved using a low pressure plasma spraying thermal spray process.

8. The method as claimed in claims 1-7, wherein the Silicon Carbide mirror is a non-scanning or static mirror.

## Patentansprüche

1. Verfahren zur Herstellung von Abtast- oder optischen Spiegeln aus Siliziumkarbid, bei dem Siliziumkarbidpulver gepresst oder aufgeprägt wird oder isostatisch gepresst wird, indem ein technischer Pressenstempel oder ein Werkzeug zum Bilden von Form und Struktur eines Abtast- oder optischen Spiegels verwendet wird, das anschließend gesintert wird, um eine Oberfläche bereitzustellen, welche die Stirnfläche des Abtast- oder optischen Spiegels werden wird, die dann mit einer geeignet dicken Schicht eines durch ein thermisches Spritzverfahren auf die Stirnfläche des Abtast- oder optischen Spiegels aufgebrachten alternativen Werkstoffes überzogen oder verbunden wird, die anschließend geläppt und/oder poliert wird, um die gewünschte Oberflächenqualität und/oder Rauhigkeit und/oder Ebenheit zu erzielen, und dann optisch beschichtet wird, indem Beschichtungstechniken und Werkstoffe verwendet werden, um die Stirnfläche zu beschichten, die anschließend die Spiegelebene mit geeigneten hoch spiegelnden, optischen Beschichtungen werden wird, die der Wellenlänge oder Wellenlängen spezifisch sind, bei denen die fertig gestellten Abtast- oder optischen Spiegel aus Siliziumkarbid verwendet werden, um in einer Endanwendung(en) zu reflektieren.

2. Verfahren nach Anspruch 1, bei dem die geeignet dicke Materialschicht, die auf den Abtast- oder optischen Spiegel aus Siliziumkarbid aufgebracht oder damit verbunden wird, Silizium oder Siliziumoxid ist.

3. Verfahren nach Anspruch 1, bei dem die geeignet dicke Materialschicht, die auf den Abtast- oder optischen Spiegel aus Siliziumkarbid aufgebracht oder damit verbunden wird, Kupfer ist.

4. Verfahren nach Anspruch 1, bei dem die geeignet dicke Materialschicht, die auf den Abtast- oder optischen Spiegel aus Siliziumkarbid aufgebracht wird, Aluminium ist.

5. Verfahren nach Anspruch 1 bis 4, bei dem die geeignet dicke Materialschicht, die auf den Abtast- oder optischen Spiegel aus Siliziumkarbid aufgebracht wird, erzielt wird, indem ein thermisches Hochgeschwindigkeits-FlammspritzVerfahren verwendet wird.

6. Verfahren nach Anspruch 1 bis 4, bei dem die geeignet dicke Materialschicht, die auf den Abtast- oder optischen Spiegel aus Siliziumkarbid aufgebracht wird, erzielt wird, indem ein thermisches Kaltgasspritzverfahren verwendet wird.

7. Verfahren nach Anspruch 1 bis 4, bei dem die geeignet dicke Materialschicht, die auf den Abtast- oder optischen Spiegel aus Siliziumkarbid aufgebracht wird, erzielt wird, indem ein thermisches Niederdruckplasma-Spritzverfahren verwendet wird.

8. Verfahren nach Anspruch 1 bis 7, bei dem der Siliziumkarbid-Spiegel ein nicht abtastender oder ruhender Spiegel ist.

## Revendications

1. Procédé de fabrication de miroirs de balayage ou optiques en carbure de silicium, la poudre du carbure de silicium étant pressée ou compactée ou pressée isostatiquement en utilisant une étampe ou un outil mécanisé pour former la forme et la structure d'un miroir de balayage ou optique qui est ensuite fritté pour fournir une surface qui deviendra le front dudit miroir de balayage ou optique qui est ensuite revêtu ou,collé avec une couche d'une épaisseur appropriée d'un matériau alternatif déposé par un procédé de projection thermique sur ledit front dudit miroir de balayage ou optique qui est ensuite rodi et/ou poli pour obtenir la qualité et/ou la rugosité et/ou la planéité désirée de la surface et ensuite revêtu optiquement en utilisant des technologies de revêtement et des matériaux pour revêtir ledit front qui deviendra ensuite la surface réfléchissante avec des revêtements optiques appropriée à grande réflectivité propre à la longueur d'ondes ou les longueurs d'ondes que les miroirs finis de balayage ou optique en carbure de silicium seront utilisés pour refléter dans une (des) application(s) finale(s).

2. Procédé selon la revendication 1, la couche d'une épaisseur appropriée d'un matériau déposé ou collé sur le miroir de balayage ou optique en carbure de silicium étant du silicium ou du dioxyde du silicium.

3. Procédé selon la revendication 1, la couche d'une épaisseur appropriée d'un matériau déposé ou collé sur le miroir de balayage ou optique en carbure de silicium étant du cuivre.

4. Procédé selon la revendication 1, la couche d'une épaisseur appropriée d'un matériau déposé ou collé sur le miroir de balayage ou optique en carbure de silicium étant de l'aluminium.

5. Procédé selon la revendication 1 à 4, la couche d'une épaisseur appropriée d'un matériau déposé ou collé sur le miroir de balayage ou optique en carbure de silicium étant obtenue par utilisation d'un procédé de projection thermique à grande vitesse avec un combustible et de l'oxygène (HVOF).

6. Procédé selon la revendication 1 à 4, la couche d'une épaisseur appropriée d'un matériau déposé ou collé sur le miroir de balayage ou optique en carbure de silicium étant obtenue par utilisation d'un procédé de projection thermique avec projection de gaz à froid.

7. Procédé selon la revendication 1 à 4, la couche d'une épaisseur appropriée d'un matériau déposé ou collé sur le miroir de balayage ou optique en carbure de silicium étant obtenue par utilisation d'un procédé de projection thermique avec projection de plasma à basse pression.

8. Procédé selon la revendication 1 à 7, le miroir de balayage ou optique en carbure de silicium étant un miroir sans balayage ou un miroir statique.
